# EUROPEAN PATENT APPLICATION

(11) **EP 4 804 323 A1**
(43) Date of publication of application: **09.09.2026**
(21) Application number: 26153821.9
(22) Date of filing: 23.01.2026
(51) Int. Cl.: H01M 50/533, H01M 50/534, H01M 50/538

(54) **SECONDARY BATTERY**

(30) Priority: 07.03.2025 KR 20250029387
(71) Applicant: SAMSUNG SDI CO., LTD., Yongin-si, Gyeonggi-do 17084 (KR)
(72) Inventor: YOON, Byung Jin, 17084 Yongin-si, Gyeonggi-do (KR)
(74) Representative: Bardehle Pagenberg Partnerschaft mbB Patentanwälte Rechtsanwälte

(57) **Abstract**

Aspects herein relate to a secondary battery (100). The secondary battery may include an electrode assembly (140) configured such that a first electrode plate (142), a second electrode plate (144), and a separator (146) are wound together, a case (110) configured to receive the electrode assembly (140) therein, a cap assembly (130) configured to seal the case (110), and a composite current collecting plate (150) located between the electrode assembly (140) and the cap assembly (130), the composite current collecting plate (150) having a plurality of lead tabs (154, 156) integrally formed thereon and being electrically connected to the first electrode plate (142) and to the cap assembly (130), the plurality of lead tabs (154, 156) being connected to the cap assembly (130).

## Description

### CROSS-REFERENCE TO THE RELATED APPLICATION

The present application claims priority to and the benefit of Korean Patent Application No. 10-2025-0029387, filed on March 7, 2025, in the Korean Intellectual Property Office, the entire disclosure of which is incorporated herein by reference.

### BACKGROUND

### 1. Field

Aspects herein relate to a secondary battery.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

Embodiments of the present disclosure provide a secondary battery configured such that a disposition and a welding structure of lead tabs are optimized, whereby current transmission efficiency is improved and resistance is minimized.

Embodiments of the present disclosure provide a secondary battery configured such that the electrical connection reliability between an electrode assembly and a cap assembly is improved.

However, the technical problems to be achieved in some embodiments of the disclosure are not limited to the technical problems mentioned above, and other technical problems not mentioned herein will be clearly understood from the following description by those skilled in the art to which the disclosure belongs.

An exemplary secondary battery according to some embodiments of the present disclosure may include an electrode assembly comprising a first electrode plate, a second electrode plate, and a separator, all of which may be wound together, a case accommodating the electrode assembly, a cap assembly sealing the case, and a composite current collecting plate located between the electrode assembly and the cap assembly, the composite current collecting plate having a plurality of lead tabs integrally formed thereon and being electrically connected to the first electrode plate and to the cap assembly, the plurality of lead tabs being connected to the cap assembly.

In addition, or alternatively, the composite current collecting plate may be made of a same metal as the first electrode plate.

In addition, or alternatively, the composite current collecting plate may include a positive electrode current collecting plate, which may be plate-shaped and may be disposed above the cap assembly, a first lead tab extending from the positive electrode current collecting plate, the first lead tab being connected to the cap assembly, and a second lead tab spaced apart from the first lead tab, the second lead tab extending from the positive electrode current collecting plate, the second lead tab being connected to the cap assembly.

In addition, or alternatively, a length of the first lead tab and a length of the second lead tab may be different from each other.

In addition, or alternatively, a length of the first lead tab may be greater than a length of the second lead tab.

In addition, or alternatively, a length of the first lead tab may be 1.5 to 2.5 times greater than a length of the second lead tab.

In addition, or alternatively, the second lead tab may be bent in a direction toward the first lead tab so as to overlap with the first lead tab. The first lead tab and the second lead tab may be fixed to the cap assembly by welding.

In addition, or alternatively, the first lead tab and the second lead tab overlap each other by a welded portion formed from a primary welding. The first lead tab and the second lead tab may be in contact with the cap assembly by a welded portion formed from a secondary welding.

In addition, or alternatively, the first lead tab and the second lead tab may be disposed in opposite directions based on the positive electrode current collecting plate.

Another exemplary secondary battery according to some embodiments of the present disclosure may include an electrode assembly configured such that a first electrode plate, a second electrode plate, and a separator may be wound together, a case configured to receive the electrode assembly therein, a cap assembly configured to seal the case, a positive electrode current collecting plate electrically connected to the electrode assembly, a first lead tab extending from the positive electrode current collecting plate, the first lead tab being connected to the cap assembly, a second lead tab extending from the positive electrode current collecting plate, the second lead tab being electrically connected to the cap assembly, the second lead tab being spaced apart from the first lead tab, and an auxiliary lead tab extending from the positive electrode current collecting plate, the auxiliary lead tab being electrically connected to the first lead tab.

In addition, or alternatively, each of the positive electrode current collecting plate, the first lead tab, the second lead tab, and the auxiliary lead tab may be made of a same metal as the first electrode plate.

In addition, or alternatively, the positive electrode current collecting plate may be disposed between the electrode assembly and the cap assembly, the positive electrode current collecting plate having a plate shape.

In addition, or alternatively, each of the first lead tab, the second lead tab, and the auxiliary lead tab may have a strip shape.

In addition, or alternatively, a length of the first lead tab, a length of the second lead tab, and a length of the auxiliary lead tab may be different from each other.

In addition, or alternatively, the second lead tab may be longer than the auxiliary lead tab. The first lead tab may be longer than the second lead tab.

In addition, or alternatively, a length of the first lead tab may be 1 to 4 times greater than a length of the auxiliary lead tab.

In addition, or alternatively, the auxiliary lead tab may be folded upwardly around the positive electrode current collecting plate, and the first lead tab may be folded upwardly around the positive electrode current collecting plate so as to overlap the auxiliary lead tab, forming an electrical connection between the first lead tab and the auxiliary lead tab.

In addition, or alternatively, the first lead tab may be bent in a direction toward the second lead tab so as to overlap with the second lead tab. The first lead tab and the second lead tab may be fixed to the cap assembly by welding.

In addition, or alternatively, the auxiliary lead tab and the first lead tab overlap each other by a welded portion from a primary welding. The first lead tab and the second lead tab overlap each other by a welded portion from a secondary welding. The first lead tab and the second lead tab may be both in contact with the cap assembly by a welded portion from a tertiary welding.

In addition, or alternatively, the first lead tab and the second lead tab may be disposed in opposite directions of the positive electrode current collecting plate. The auxiliary lead tab may be disposed between the first lead tab and the second lead tab.

According to aspects described herein, a disposition and a welding structure of the lead tabs may be optimized, whereby an efficiency of a transmission of current may be improved and resistance may be minimized.

According to aspects described herein, an electrical connection reliability between the electrode assembly and the cap assembly may be improved, whereby a risk of a short circuit may be reduced.

However, the effects achievable through the present invention are not limited to those described above, and other technical effects not mentioned can be clearly understood by those skilled in the art from the description of the invention provided above.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is a perspective view of a secondary battery according to some embodiments of the present disclosure.
FIG. 2 is a sectional view of a secondary battery according to some embodiments of the present disclosure.
FIG. 3 is a sectional view showing a cap assembly that is separated from a case according to some embodiments of the present disclosure.
FIG. 4 is a plan view showing a composite current collecting plate according to some embodiments of the present disclosure.
FIG. 5 is a plan view showing a first lead tab, which is folded in a direction toward a second lead tab, according to some embodiments of the present disclosure.
FIG. 6 is a sectional view showing a first lead tab and a second lead tab being connected to a cap assembly according to some embodiments of the present disclosure.
FIG. 7 is a sectional view of a secondary battery according to some embodiments of the present disclosure.
FIG. 8 is a sectional view showing a cap assembly that is separated from a case according to some embodiments of the present disclosure.
FIG. 9 is a plan view showing a composite current collecting plate according to some embodiments of the present disclosure.
FIG. 10 is a plan view showing an auxiliary lead tab, which is folded upwardly from a positive electrode current collecting plate, according to some embodiments of the present disclosure.
FIG. 11 is a plan view showing a first lead tab, which is folded in a direction toward a second lead tab, according to some embodiments of the present disclosure.
FIG. 12 is a sectional view showing a first lead tab and a second lead tab being connected to a cap assembly according to some embodiments of the present disclosure.
FIGS. 13 and 14 are perspective views showing a battery pack including a secondary battery according to some embodiments of the present disclosure.
FIGS. 15 and 16 show a perspective view and a side view, respectively, of a vehicle including a battery pack according to some embodiments of the present disclosure.

### DETAILED DESCRIPTION

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, some embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

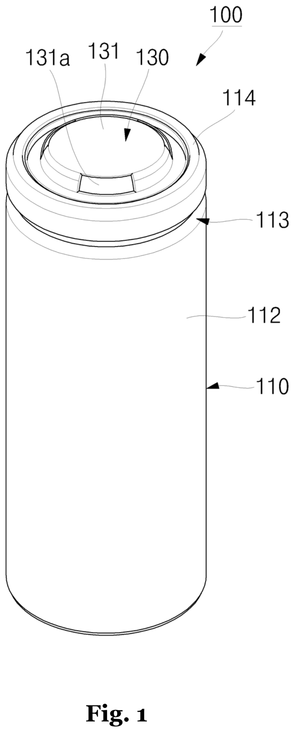

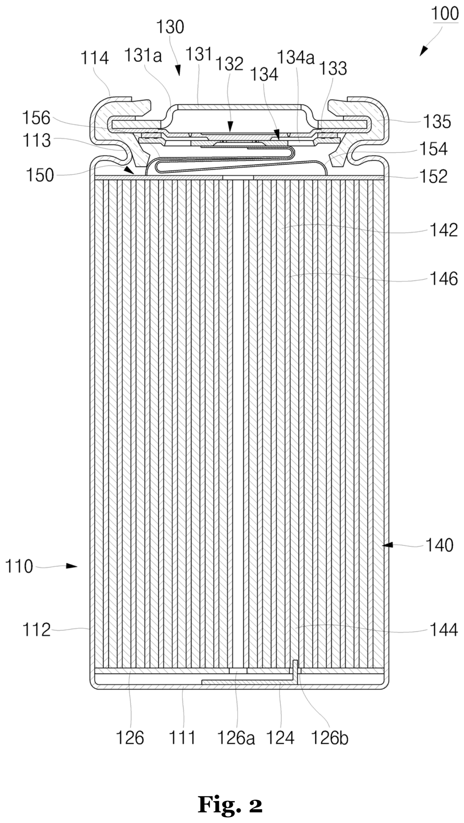

FIG. 1 is a perspective view of a secondary battery according to some embodiments of the present disclosure. FIG. 2 is a sectional view of a secondary battery according to some embodiments of the present disclosure. As shown in FIGS. 1 and 2, a secondary battery 100 according to some embodiments of the present disclosure may include a composite current collecting plate 150, an electrode assembly 140, a case 110, and a cap assembly 130. The secondary battery 100 may further include a negative electrode tab 124 and an insulating plate 126.

The present disclosure relates to technology for improving electrical connection reliability between the electrode assembly 140 and the cap assembly 130 in the secondary battery 100, improving efficiency of a transmission of current and minimizing resistance.

To this end, the present disclosure may be configured such that a plurality of lead tabs is integrally formed at a positive electrode current collecting plate 152 disposed between the electrode assembly 140 and the cap assembly 130 to distribute a current path and reduce resistance. The plurality of lead tabs may be formed so as to have different lengths, and the lead tabs may be welded to the cap assembly 130 at different positions due to the length difference between the lead tabs, thereby increasing bonding strength and improving the stability of an electrical connection between the lead tabs.

The plurality of lead tabs may be disposed in a specific shape and may be welded using a specific welding method, allowing for overlapping and for multiple welding processes between the lead tabs to increase bonding strength between the electrode assembly 140 and the cap assembly 130. This configuration may uniformly distribute a current transmission path, may reduce a risk of a short circuit, and may improve durability of the battery.

The present disclosure may include an electrode assembly 140, a positive electrode current collecting plate 152, a plurality of lead tabs, and a cap assembly 130, wherein the disposition, length, and welding method of the lead tabs may be optimized to secure reliability of electrical connection and to improve battery performance.

The case 110 according to some embodiments of the present disclosure may have an inner space configured to receive the electrode assembly 140. The case 110 may be formed with one side open and may be modified into various shapes as needed. In some embodiments, the case 110 may include a bottom portion 111 and a side wall portion 112.

The bottom portion 111 may be formed in a circular plate shape, and the side wall portion 112 may be formed in a cylindrical shape and may extend upward from the bottom portion 111 by a certain length. The bottom portion 111 and the side wall portion 112 of the case 110 may be integrally formed.

In a process of manufacturing the secondary battery 100, an upper end or a lower end of the cylindrical case 110 may be open. The electrode assembly 140 may be received in the case 110 together with an electrolyte, and the cap assembly 130 may be coupled to the open end of the case 110, whereby the case 110 may be sealed.

In some embodiments, if the case 110 is inverted, the bottom portion 111 may be located above, and the cap assembly 130 may be located under the case 110.

The cylindrical case 110 may include steel, a steel alloy, nickel-plated steel, stainless steel, aluminum, or an aluminum alloy. The case 110 may be referred to as a can, a housing, or a cladding.

In some embodiments, the cylindrical case 110 may include a beading portion 113 depressed inwardly in a portion of the cylindrical case 110 located under the cap assembly 130 to prevent the electrode assembly 140 and the cap assembly 130 from being ejected outward, and may include a crimping portion 114 bent inwardly in the part of the case located above the cap assembly 130.

The electrode assembly 140 may be referred to as an electrode group, an electrode body, or a jelly-roll. The electrode assembly 140 according to some embodiments of the present disclosure may include a first electrode plate 142, a second electrode plate 144, and a separator 146.

The first electrode plate 142, the second electrode plate 144, and the separator 146 may be stacked and wound, whereby the electrode assembly 140 may be formed into a cylindrical shape. The electrode assembly 140 may include a core, which is an empty space, provided in the center.

The first electrode plate 142 may be referred to as a positive electrode plate, and the second electrode plate 144 may be referred to as a negative electrode plate. The opposite configuration is also possible.

The first electrode plate 142 according to some embodiments of the present disclosure may include a first substrate and a first active material layer. In some embodiments, the first active material may be a transition metal oxide (e.g., LiCoO₂, LiNiO₂, or LiMn₂O₄) and may be coated on the first substrate to form a first active material layer. The first substrate may be made of an aluminum (Al) foil.

The first electrode plate 142 may be electrically connected to the cap assembly 130 via the composite current collecting plate 150, and the second electrode plate 144 may be directly electrically connected to the bottom portion 111 of the case 110. The second electrode plate 144 may be electrically connected to a negative electrode current collecting plate, and the negative electrode current collecting plate may be electrically connected to the bottom portion 111 of the case 110.

The second electrode plate 144 according to some embodiments of the present disclosure may include a second substrate and a second active material layer. The second active material may be a negative electrode active material such as graphite or carbon and may be coated on the second substrate to form a second active material layer. The second substrate may be made of a copper (Cu) or nickel (Ni) foil.

In some embodiments, a negative electrode tab 124 protruding and extending downward by a certain length may be welded to the second electrode plate 144, and the opposite configuration is also possible. In some embodiments, the negative electrode tab 124 may include copper or nickel. The second electrode plate 144 may be electrically connected to the case 110 via the negative electrode tab 124. In some embodiments, the negative electrode tab 124 electrically connected to the electrode assembly 140 may be welded to the bottom portion 111 of the cylindrical case 110. Consequently, the cylindrical case 110 may function as a negative electrode.

The separator 146 may be located between the first electrode plate 142 and the second electrode plate 144 to prevent electrical short circuit and to allow only the migration of lithium ions. In some embodiments, the separator 146 may be located inside and outside the first electrode plate 142. In some embodiments, the first electrode plate 142, the separator 146, and the second electrode plate 144 may be stacked and wound into a cylindrical shape. The separator 146 may be made of polyethylene (PE) or polypropylene (PP).

The composite current collecting plate 150 may be located between the electrode assembly 140 and the cap assembly 130. The composite current collecting plate 150 may be electrically connected to the first electrode plate 142 and the cap assembly 130, and may be variously modified as long as the plurality of lead tabs connected to the cap assembly 130 is integrally formed. Only one lead tab may be installed, or two or more lead tabs may be installed as needed. A lower side of the composite current collecting plate 150 may be plate-shaped and may be electrically connected to the first electrode plate 142 of the electrode assembly 140. The composite current collecting plate 150 may be made of the same metal as the first electrode plate 142. The composite current collecting plate 150 may serve as a current flow path between the first electrode plate 142 of the electrode assembly 140 and the cap assembly 130.

The cap assembly 130 may be modified into various shapes as long as the cap assembly 130 can seal the case 110. The cap assembly 130 may include a upper cap 131, a safety vent 132 coupled to the upper cap 131, a lower cap which is connected to the safety vent 132 and to which the composite current collecting plate 150 is electrically connected, and an insulating gasket 135 interposed between the upper cap 131 and the safety vent 132 and the case 110.

The cap assembly 130 may include a upper cap 131 having a plurality of through-holes 131a, a safety vent 132 coupled to the upper cap 131, a connecting ring 133 located under the safety vent 132, and a lower cap 134 located under the safety vent 132. The connecting ring 133 may have a plurality of through-holes 134a and may be electrically connected to the composite current collecting plate 150. In some embodiments, the cap assembly 130 may further include an insulating gasket 135 configured to insulate the upper cap 131, the safety vent 132, and the lower cap 134 from the side wall portion 112 of the cylindrical case 110. The cap assembly 130 may include or be referred to as a cap, a cap group, a cap assembly, a lid, a cover, or a top.

The insulating gasket 135 interposed between the upper cap 131 and the safety vent 132 and the case 110 may be substantially pressed between the beading portion 113 and the crimping portion 114 formed on the side wall portion 112 of the cylindrical case 110. The through-hole 131a of the upper cap 131 and the through-hole 134a of the lower cap 134 may discharge internal gas to the outside if abnormal internal pressure is generated in the cylindrical case 110. In some embodiments, the internal gas may reverse the safety vent 132 in an upward direction through the through-hole 134a of the lower cap 134, the safety vent 132 may be electrically separated from the lower cap 134, and the safety vent 132 may be torn (opened), allowing the internal gas to be released to the outside through the through-hole 131a of the upper cap 131.

An electrolyte (not shown) may be injected into the cylindrical case 110, which may allow lithium ions generated by an electrochemical reaction at the second electrode plate 144 and the first electrode plate 141 in the battery to move during charging and discharging. The electrolyte may include a non-aqueous organic electrolyte, which is a mixture of a lithium salt and a high-purity organic solvent. In some embodiments, the electrolyte may include a polymer using polyelectrolyte or a solid electrolyte.

An insulating plate 126 coupled to the cylindrical case 110 and having a first hole 126a formed in the center of the insulating plate 126 and a second hole 126b formed in an outer side of the insulating plate 126 may be interposed between the electrode assembly 140 and the bottom portion 111. The insulating plate 126 may prevent electrical contact between the electrode assembly 140 and a bottom of the cylindrical case 110. The insulating plate 126 may prevent electrical contact between the first electrode plate 142 of the electrode assembly 140 and the bottom portion 111. If a large amount of gas is generated due to abnormality of the secondary battery 100, the first hole 126a may allow the gas to quickly move upward, and the second hole 126b may allow the negative electrode tab 124 to extend through the insulating plate 126 and to be welded to the bottom portion 111.

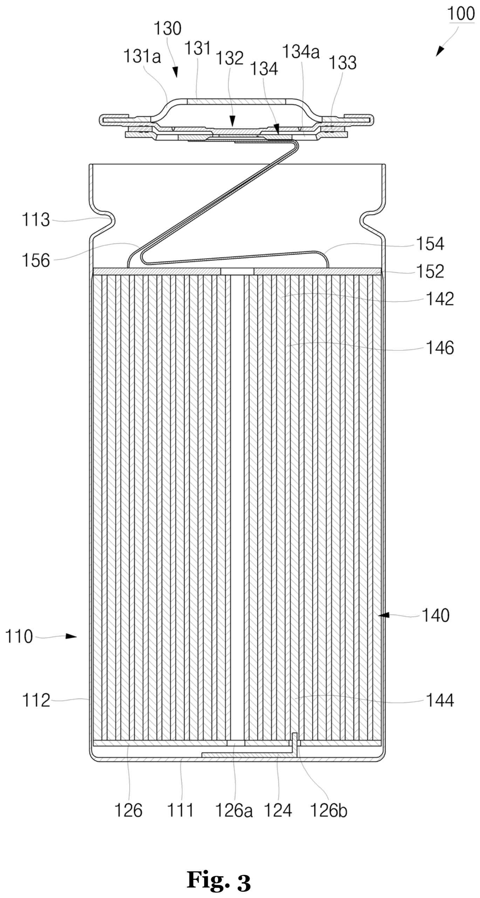

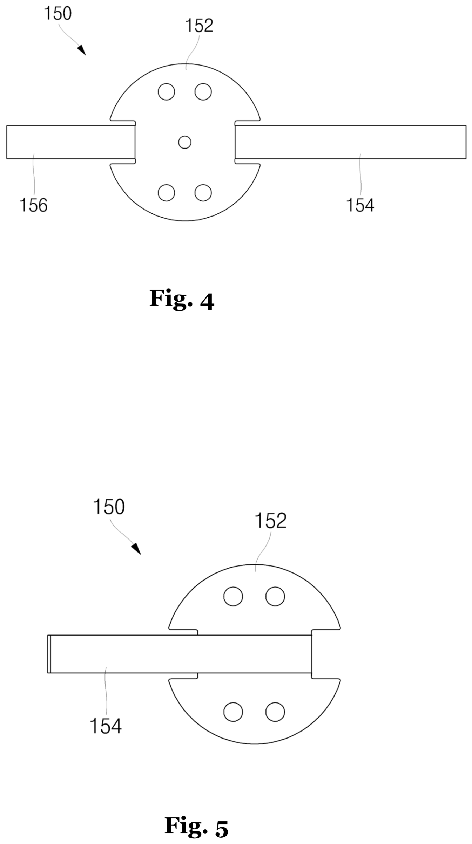

FIG. 3 is a sectional view showing a cap assembly that is separated from a case according to some embodiments of the present disclosure. FIG. 4 is a plan view showing a composite current collecting plate according to some embodiments of the present disclosure. As shown in FIGS. 3 and 4, the composite current collecting plate 150 according to some embodiments of the present disclosure may include a positive electrode current collecting plate 152, a first lead tab 154, and a second lead tab 156.

The composite current collecting plate 150 may include a plurality of lead tabs that can be electrically connected to a positive electrode terminal such as the cap assembly 130 or a rivet terminal, and the lead tabs may be formed so as to have different lengths. Lengths of the lead tabs may be configured such that the length of a longer lead tab is approximately 1.5 to 2.5 times greater than that of a shorter lead tab based on a bending line.

The plurality of lead tabs may be located on the positive electrode current collecting plate 152 in 180-degree opposite directions, and the longer lead tab may be completely bent toward the shorter lead tab and then secondarily bent in a direction perpendicular to the current collecting plate.

The plurality of bent lead tabs may be located under the cap assembly 130 and welded to the cap assembly 130. At this time, primary welding between the lead tabs may be formed, followed by welding the lead tabs to the cap assembly 130, or the lead tabs may be directly welded to the cap assembly 130 in an overlapping state without prior welding. As used herein, "primary welding," "secondary welding," and "tertiary welding" refer to a sequence of welding steps, and the components joined may vary depending on embodiments.

This configuration may ensure the reliability of electrical connection and may minimize resistance by distributing the current transmission path.

The positive electrode current collecting plate 152 may be plate-shaped, may be disposed above the cap assembly 130, and may have a plurality of holes. The positive electrode current collecting plate 152 according to some embodiments of the present disclosure may be formed as a circular metal plate having a shape corresponding to an upper surface of the electrode assembly 140. An area or a size of the positive electrode current collecting plate 152 may be equal to an area or a size of the upper surface of the electrode assembly 140, or may be less than the area or size of the upper surface of the electrode assembly 140, as long as electrical connection of the electrode assembly 140 can be effectively performed.

The positive electrode current collecting plate 152 may be made of aluminum, an aluminum alloy, nickel-plated steel plate, or other conductive metal materials. The positive electrode current collecting plate 152 may be fixed and electrically connected to the first electrode plate 142 exposed upwardly of the electrode assembly 140 by welding such that a lower surface of the first electrode plate 142 is in direct contact with the upper surface of the electrode assembly 140. One of laser welding, ultrasonic welding, or resistance welding may be performed as the welding method.

The positive electrode current collecting plate 152 may generally be formed in a flat shape and may be formed such that a central part of the positive electrode current collecting plate 152 protrudes in a direction toward the cap assembly 130 as needed.

In some embodiments, a plurality of lead tabs may be integrally formed at the positive electrode current collecting plate 152, and the lead tabs may be electrically connected to the cap assembly 130. The length and disposition of the lead tabs may be designed in various ways in order to maximize a current dispersion effect and to minimize resistance.

The positive electrode current collecting plate 152 may be used with an insulator in order to ensure stability in the case 110 and may prevent expansion or displacement of the electrode assembly 140.

The first lead tab 154 may be a conductor that extends from the positive electrode current collecting plate 152 and is electrically connected to the cap assembly 130. The first lead tab 154 may generally be formed in a rectangular strip shape and may have sufficient ductility so as to be easily used for bending and welding.

The first lead tab 154, which may be formed integrally at the positive electrode current collecting plate 152, may protrude from an outer periphery of the positive electrode current collecting plate 152 or may extend inwardly of the positive electrode current collecting plate 152. In some embodiments, the first lead tab 154 may be located under the cap assembly 130 and may be welded at a specific location for direct electrical connection to the cap assembly 130.

The first lead tab 154 may be coupled to the cap assembly 130 in order to efficiently distribute current together with another lead tab (e.g., the second lead tab 156). At this time, the first lead tab 154 may be bent upwardly of the positive electrode current collecting plate 152 and may be welded to a lower part of the cap assembly 130 together with the second lead tab 156.

Laser welding, ultrasonic welding, or resistance welding may be used as the welding method, and a bonding strength between the first lead tab 154 and the cap assembly 130 may be secured and electrical connection reliability may be improved by welding.

The length of the first lead tab 154 may be adjusted to optimize the current flow and to minimize resistance by maintaining a uniform current density.

The first lead tab 154 may be made of a conductive metal such as aluminum, an aluminum alloy, or nickel-plated steel plate so as to be stably maintained even in a high-temperature environment. Anti-oxidation coating may be used as needed.

The first lead tab 154 according to the present disclosure may be used as a component for ensuring electrical connection reliability and efficiently distributing the current path.

The second lead tab 156 may be spaced apart from the first lead tab 154 and may extend from the positive electrode current collecting plate 152. The second lead tab 156 may be electrically connected to the cap assembly 130 together with the first lead tab 154. The second lead tab 156 may be formed in a rectangular strip shape and may have sufficient flexibility to facilitate bending and welding.

The second lead tab 156 may be formed integrally at the positive electrode current collecting plate 152, and this integral structure may simplify an assembly step and reduce the time and cost required for the manufacturing process.

In some embodiments, the first lead tab 154 and the second lead tab 156 may be disposed in opposite directions based on the positive electrode current collecting plate 152. If the first lead tab 154 is located in a first direction of the positive electrode current collecting plate 152, the second lead tab 156 may be located in a second direction of the positive electrode current collecting plate 152, which is opposite the first direction.

In some embodiments, lengths of the first lead tab 154 and the second lead tab 156 may be different from each other. For example, the length of the first lead tab 156 may be greater than that of the second lead tab 154, and, particularly, the length of the first lead tab 154 may be 1.5 to 2.5 times greater than that of the second lead tab 156.

The configurations of FIGS. 3 and 4 may contribute to uniform current distribution between the lead tabs, stable current density, and electrical connection reliability.

FIG. 5 is a plan view showing a first lead tab, which is folded in a direction toward a second lead tab, according to some embodiments of the present disclosure. As shown in FIG. 5, the second lead tab 156 is formed so as to be longer than the first lead tab 154.

The second lead tab 156 may be bent toward the first lead tab 154, and the bent second lead tab 156 may be located on the first lead tab 154 in an overlapping state. This arrangement may allow the two lead tabs to be disposed in an overlapping state, thereby increasing the welding contact area with the cap assembly 130 and improving electrical connection reliability.

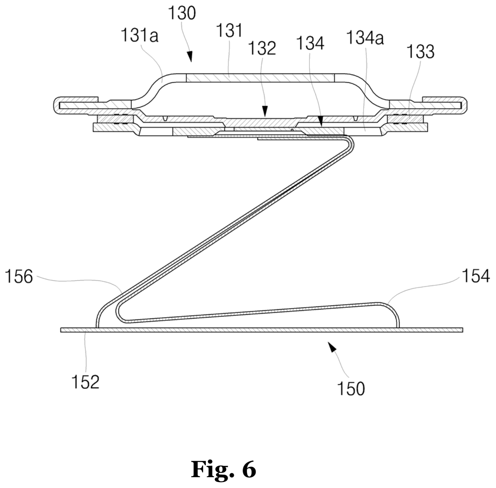

FIG. 6 is a sectional view showing a first lead tab and a second lead tab being connected to a cap assembly according to some embodiments of the present disclosure. As shown in FIG. 6, the second lead tab 156 may be bent toward the first lead tab 154, and may be located under the cap assembly 130 while being located on the first lead tab 154 in an overlapping state.

When the first lead tab 154 and the second lead tab 156 overlap each other, primary welding may be performed on the contact surface between the two lead tabs, forming a welded portion between the two lead tabs. The primary welding may ensure electrical connection between the two lead tabs and may stably fix the lead tabs.

Subsequently, secondary welding may be performed to electrically connect the first lead tab 154 and the second lead tab 156 to the cap assembly 130 such that the first lead tab 154 and the second lead tab 156 are in contact with the cap assembly 130, forming a welded portion between the cap assembly 130 and each of the two lead tabs. The secondary welding may ensure a reliability of a transmission of current between the lead tabs and the cap assembly 130 and may increase a bonding strength and durability .

The second lead tab 156 may be designed to be longer, thereby increasing a contact area between the lead tabs during bonding. As the two lead tabs are disposed so as to overlap each other, electrical connection reliability may be enhanced, and resistance may be minimized. The electrical bonding strength and durability between the lead tabs and the cap assembly 130 may be improved by the primary welding and the secondary welding.

As shown in FIGS. 5 and 6, the structure in which the first lead tab 154 and the second lead tab 156 are electrically joined to the cap assembly 130 can enhance the reliability of the current transmission path and reduce electrical resistance. This structure can also improve the durability and operational reliability of the battery.

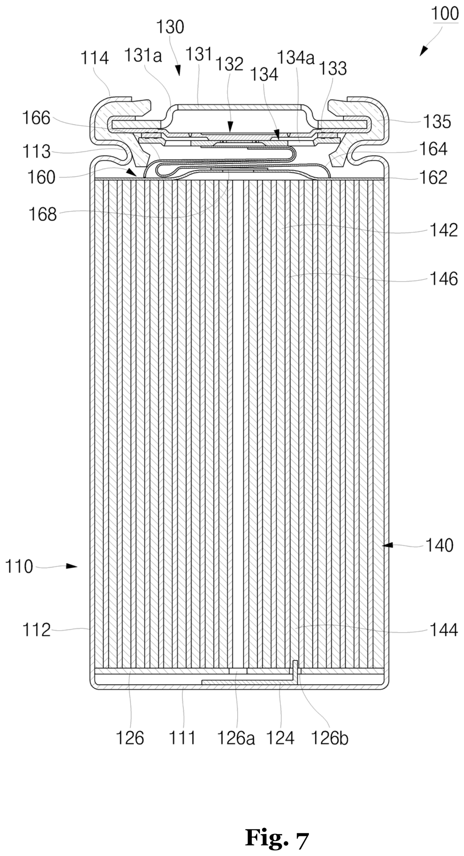

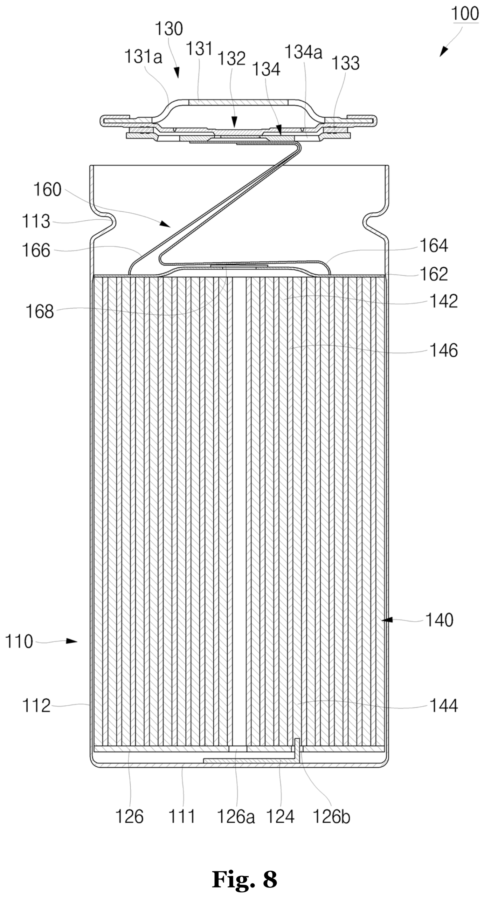

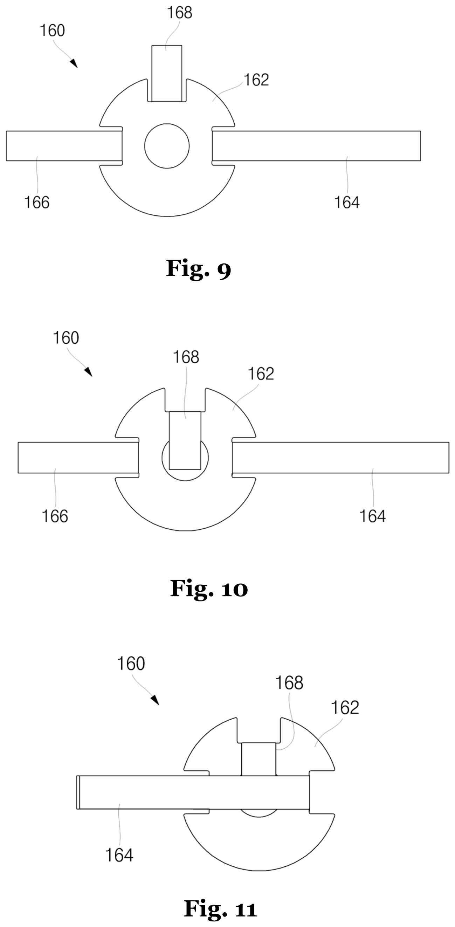

FIG. 7 is a sectional view of a secondary battery according to some embodiments of the present disclosure. FIG. 8 is a sectional view showing a cap assembly that is separated from a case according to some embodiments of the present disclosure. FIG. 9 is a plan view showing a composite current collecting plate according to some embodiments of the present disclosure. As shown in FIGS. 7 to 9, the secondary battery 100 according to some embodiments of the present disclosure may have a configuration identical or similar to that of the previous embodiment of the present disclosure, except that an auxiliary lead tab 168 is added to the composite current collecting plate 160. Therefore, a detailed description of the configuration identical or similar to that of the previous embodiment of the present disclosure will be omitted.

The secondary battery 100 according to some embodiments of the present disclosure may include an electrode assembly 140, a case 110, a cap assembly 130, and a composite current collecting plate 160. The secondary battery may further include a negative electrode tab 124 and an insulating plate 126.

The configurations of the electrode assembly 140, the case 110, the cap assembly 130, the negative electrode tab 124, and the insulating plate 126 may be the same or may be similar to the above-described embodiments of the present disclosure, and, therefore, a description thereof will be omitted.

The composite current collecting plate 160 may include a positive electrode current collecting plate 162, a first lead tab 164, a second lead tab 166, and an auxiliary lead tab 168.

For the composite current collecting plate 160 including the three lead tabs, lengths of the lead tabs that may be electrically connected to a positive electrode terminal (e.g., the cap assembly 130 or a rivet terminal) may be different from each other.

The three lead tabs may be formed such that the length of the longest lead tab is approximately 1 to 4 times greater than the length of the shortest lead tab based on a bending line.

The positive electrode current collecting plate 162 may include a step structure with a central part of the positive electrode current collecting plate 162 protruding upward, and the shortest lead tab may be bent so as to be in contact with the protruding central part of the positive electrode current collecting plate 162.

Subsequently, the longest lead tab may be completely bent toward the second longest lead tab, and the shortest lead tab and the longest lead tab may be welded to each other to overlap at the step structure of the central part of the positive electrode current collecting plate 162.

This configuration including the three lead tabs may contribute to evenly distributing the current transmission path and further enhancing electrical connection reliability using the difference in length among the lead tabs.

The composite current collecting plate 160 may include the three lead tabs extending from the positive electrode current collecting plate 162. The shortest lead tab may not be directly connected to the cap assembly 130 but may be electrically connected to the longest lead tab in contact therewith. The longest lead tab may be directly welded to the cap assembly 130 to form electrical connection and may provide an additional current path through contact with the shortest lead tab.

The first lead tab 164 and the second lead tab 166 may be electrically connected to the cap assembly 130 to overlap each other. This configuration may be identical or similar to one of the embodiments described above in the present disclosure.

In some embodiments, the first lead tab 164 and the second lead tab 166 may be disposed in opposite directions based on the positive electrode current collecting plate 162. The auxiliary lead tab 168 may be located between the first lead tab 164 and the second lead tab 166 and may be located in the middle to maintain a balanced current transmission path and to enhance electrical connection reliability. This configuration may evenly distribute the current transmission path, may increase the bonding strength, may improve welding reliability with the cap assembly 130, and may contribute to minimizing electrical resistance by utilizing the difference in the lengths of the lead tabs.

The positive electrode current collecting plate 162 may be a component that is disposed between the electrode assembly 140 and the cap assembly 130 and is electrically connected to a positive electrode of the electrode assembly 140. The positive electrode current collecting plate 162 may be formed in a plate shape for efficient current transmission and may be modified in various ways.

The positive electrode current collecting plate 162 may generally be made of aluminum, an aluminum alloy, nickel-plated steel plate, or other conductive metal materials. In some embodiments, the positive electrode current collecting plate 162 may be made of a same metal as the first electrode plate 142 and may be directly welded to an upper side of the electrode assembly 140 to enhance the electrical connection reliability with the first electrode plate 142 of the electrode assembly 140.

The positive electrode current collecting plate 162 may include a step structure provided at the central part of the positive electrode current collecting plate 162, and the step structure may be designed to support dispositions and bending properties of the lead tabs.

In some embodiments, the plurality of lead tabs (the first lead tab 164, the second lead tab 166, and the auxiliary lead tab 168) may be integrally formed at the positive electrode current collecting plate 162. The lead tabs may have different lengths, may contribute to distributing current transmission, and may minimize electrical resistance.

The positive electrode current collecting plate 162 may be connected to the cap assembly 130 via the first lead tab 164 and the second lead tab 166, and the auxiliary lead tab 168 may be disposed between the first lead tab 164 and the second lead tab 166 to assist current transmission and to improve electrical connection reliability. This configuration may contribute to improving the efficiency of current transmission and enhancing the welding reliability with the cap assembly 130.

The first lead tab 164 may be a component that integrally extends from the positive electrode current collecting plate 162 and is electrically connected to the cap assembly 130. The first lead tab 164 may extend in a rectangular strip shape and may be electrically connected to the cap assembly 130 in order to provide a current transmission path and ensure electrical connection reliability.

In some embodiments, the first lead tab 164 may be formed integrally at the positive electrode current collecting plate 162 and may be directly welded to the cap assembly 130 in order to minimize electrical resistance and ensure stable current flow. Various welding methods, such as laser welding, resistance welding, and ultrasonic welding, may be used.

The first lead tab 164 may extend from the positive electrode current collecting plate 162 together with the second lead tab 166 and the auxiliary lead tab 168. At this time, the first lead tab 164, the second lead tab 166, and the auxiliary lead tab 168 may be formed so as to have different lengths, and the difference in the lengths of the lead tabs may be a design feature to uniformly distribute the current and to minimize the resistance.

In some embodiments, the second lead tab 166 may be longer than the auxiliary lead tab 168, and the first lead tab 164 may be longer than the second lead tab 166. The length of the first lead tab 164 may be approximately 1 to 4 times greater than that of the auxiliary lead tab 168. This configuration may maintain a stable current transmission path, may prevent current concentration, and may improve electrical connection reliability with the cap assembly 130.

The second lead tab 166 may be a component that extends from the positive electrode current collecting plate 162 and that is electrically connected to the cap assembly 130. The second lead tab 166 may be disposed spaced apart from the first lead tab 164 and may serve to secure the current transmission path and to enhance electrical reliability.

The second lead tab 166 may extend in a rectangular strip shape and may be formed integrally at the positive electrode current collecting plate 162. In some embodiments, the second lead tab 166 may extend in the opposite direction to the first lead tab 164, and may be bent and fixed for connection to the cap assembly 130.

The auxiliary lead tab 168 may extend from the positive electrode current collecting plate 162 and may be electrically connected to the second lead tab 166. The auxiliary lead tab 168 may be an additional component added to increase current dispersion and electrical connection strength and may serve to supplement a flow of current.

The auxiliary lead tab 168 may formed integrally at the positive electrode current collecting plate 162 and may be connected indirectly to the cap assembly 130 via the first lead tab 164 instead of being connected directly to the cap assembly 130.

At the positive electrode current collecting plate 162, the first lead tab 164 may be located in a specific direction (e.g., at the 3 o'clock position of the positive electrode current collecting plate 162, with reference to FIG. 9), and the second lead tab 166 may be located in the opposite direction (e.g., at the 9 o'clock position, with reference to FIG. 9) to the first lead tab 164. The auxiliary lead tab 168 may be located in the middle (e.g., at the 12 o'clock position, with reference to FIG. 9) between the first lead tab 164 and the second lead tab 166.

This lead tab arrangement may distribute current flow, may ensure the weld strength of each lead tab, and may improve electrical connection reliability.

FIG. 10 is a plan view showing an auxiliary lead tab, which is folded upwardly around a positive electrode current collecting plate, according to some embodiments of the present disclosure. FIG. 11 is a plan view showing a first lead tab, which is folded in a direction toward a second lead tab, according to some embodiments of the present disclosure. As shown in FIG. 10 and FIG. 11, the auxiliary lead tab 168 may be folded upwardly around the positive electrode current collecting plate 162 and the first lead tab 164 may be folded upwardly around the positive electrode current collecting plate 162 so as to be electrically connected to the auxiliary lead tab 168 in an overlapping state.

In some embodiments, the first lead tab 164 may be bent toward the second lead tab 166. The first lead tab 164 may be electrically connected to the cap assembly 130 while overlapping the second lead tab 166. The contact area between the lead tabs may sufficiently enhance a weld strength with the cap assembly 130.

In some embodiments, primary welding may be performed such that the auxiliary lead tab 168 and the first lead tab 164 overlap each other, and then secondary welding may be performed such that the first lead tab 164 and the second lead tab 166 overlap each other. This multiple welding method may contribute to ensuring electrical connection reliability between the lead tabs and stably maintaining a current transmission path between the lead tabs.

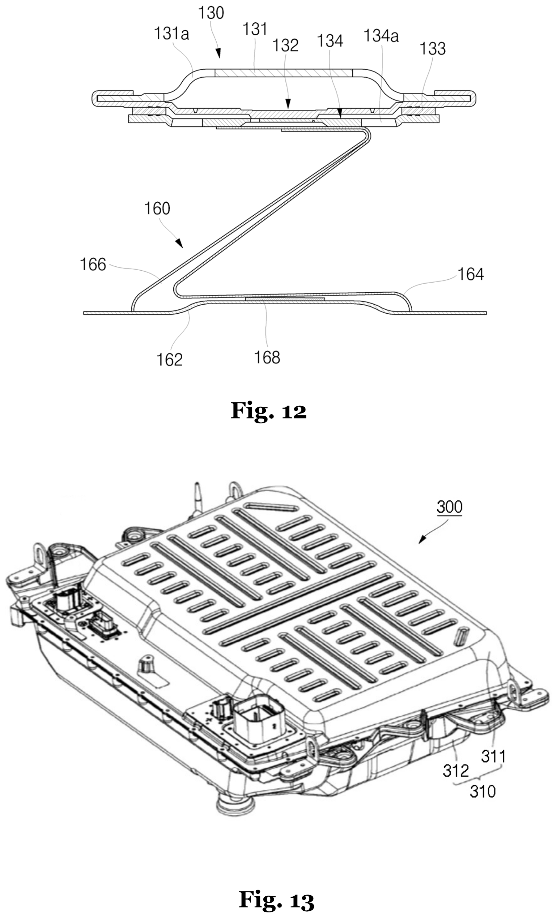

FIG. 12 is a sectional view showing a first lead tab and a second lead tab being connected to a cap assembly according to some embodiments of the present disclosure. As shown in FIG. 12, tertiary welding may be performed such that the first lead tab 164 and the second lead tab 166 are both in contact with the cap assembly 130, forming a welded portion between the cap assembly 130 and each of the two lead tabs. This configuration may stably maintain a transmission path of the current through multiple welded portions and may enhance electrical connection reliability by ensuring weld strength.

As the positive electrode active material, a compound capable of reversibly intercalating /deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA₁₋₃X₃O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.9₀≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

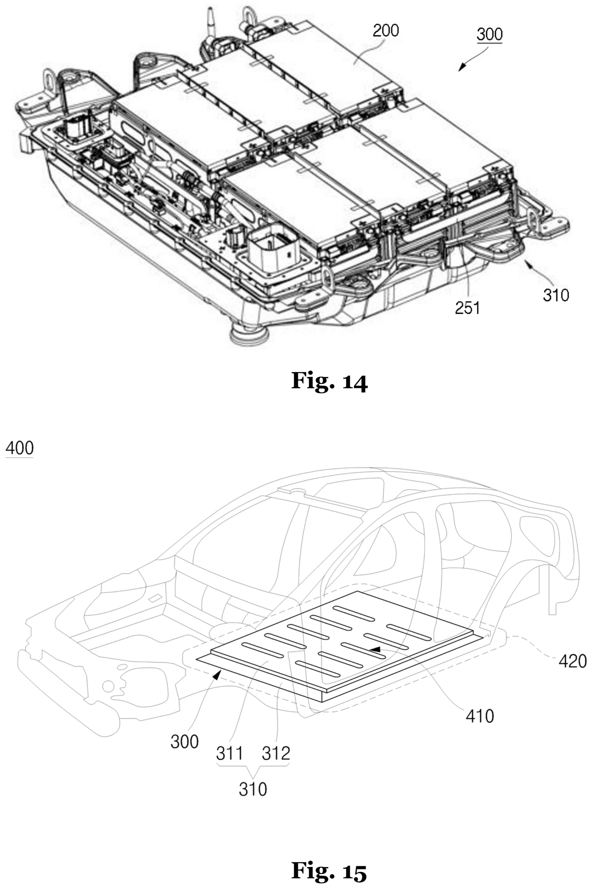

The batteries according to the above-described embodiments may be used to manufacture a battery pack. FIGS. 13 and 14 are perspective views showing a battery pack including a secondary battery according to some embodiments of the present disclosure. Referring to FIGS. 13 and 14, the battery pack 300 may include a plurality of battery modules 200 and a housing 310 to accommodate the plurality of battery modules 200. For example, the housing 310 may comprise a first and a second housing (i.e., a battery pack cover 311 and a pack frame 312) that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

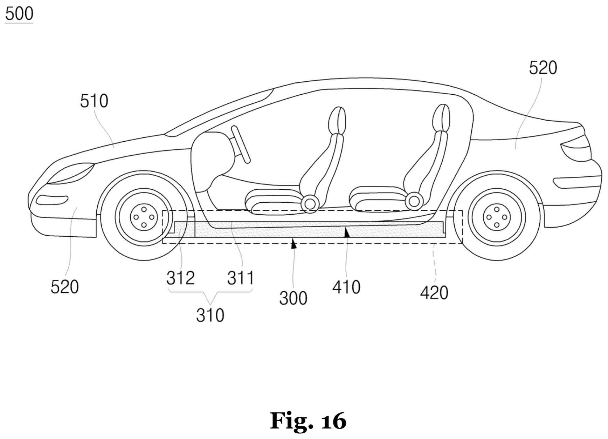

FIGS. 15 and 16 show a perspective view and a side view, respectively, of a vehicle including a battery pack according to some embodiments of the present disclosure.

In FIG. 15, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 16, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body 400.

Although a few embodiments of the present disclosure have been shown and described, it would be appreciated by those skilled in the art that various changes and modifications may be made in this embodiment without departing from the principles and technical idea of the disclosure.

### Further embodiments:

### Embodiment 1:

A secondary battery comprising:
an electrode assembly comprising a first electrode plate, a second electrode plate, and a separator, all of which are wound together;
a case accommodating the electrode assembly;
a cap assembly sealing the case; and
a composite current collecting plate located between the electrode assembly and the cap assembly, the composite current collecting plate having a plurality of lead tabs integrally formed thereon and being electrically connected to the first electrode plate and to the cap assembly, the plurality of lead tabs being connected to the cap assembly.

### Embodiment 2:

The secondary battery as claimed in Embodiment 1, wherein the composite current collecting plate is made of a same metal as the first electrode plate.

### Embodiment 3:

The secondary battery as claimed in Embodiment 1, wherein the composite current collecting plate comprises:
a positive electrode current collecting plate, which is plate-shaped and is disposed above the cap assembly;
a first lead tab extending from the positive electrode current collecting plate, the first lead tab being connected to the cap assembly; and
a second lead tab spaced apart from the first lead tab, the second lead tab extending from the positive electrode current collecting plate, the second lead tab being connected to the cap assembly.

### Embodiment 4:

The secondary battery as claimed in Embodiment 3, wherein a length of the first lead tab and a length of the second lead tab are different from each other.

### Embodiment 5:

The secondary battery as claimed in Embodiment 3, wherein a length of the first lead tab is greater than a length of the second lead tab.

### Embodiment 6:

The secondary battery as claimed in Embodiment 5, wherein a length of the first lead tab is 1.5 to 2.5 times greater than a length of the second lead tab.

### Embodiment 7:

The secondary battery as claimed in Embodiment 5, wherein the second lead tab is bent in a direction toward the first lead tab so as to overlap with the first lead tab, and wherein the first lead tab and the second lead tab are fixed to the cap assembly by welding.

### Embodiment 8:

The secondary battery as claimed in Embodiment 5, wherein the first lead tab and the second lead tab overlap each other by a welded portion formed from a primary welding, and
wherein the first lead tab and the second lead tab are in contact with the cap assembly by a welded portion formed from a secondary welding.

### Embodiment 9:

The secondary battery as claimed in Embodiment 3, wherein the first lead tab and the second lead tab are disposed in opposite directions based on the positive electrode current collecting plate.

### Embodiment 10:

A secondary battery comprising:
an electrode assembly configured such that a first electrode plate, a second electrode plate, and a separator are wound together;
a case configured to receive the electrode assembly therein;
a cap assembly configured to seal the case;
a positive electrode current collecting plate electrically connected to the electrode assembly;
a first lead tab extending from the positive electrode current collecting plate, the first lead tab being connected to the cap assembly;
a second lead tab extending from the positive electrode current collecting plate, the second lead tab being electrically connected to the cap assembly, the second lead tab being spaced apart from the first lead tab; and
an auxiliary lead tab extending from the positive electrode current collecting plate, the auxiliary lead tab being electrically connected to the first lead tab.

### Embodiment 11:

The secondary battery as claimed in Embodiment 10, wherein each of the positive electrode current collecting plate, the first lead tab, the second lead tab, and the auxiliary lead tab is made of a same metal as the first electrode plate.

### Embodiment 12:

The secondary battery as claimed in Embodiment 10, wherein the positive electrode current collecting plate is disposed between the electrode assembly and the cap assembly, the positive electrode current collecting plate having a plate shape.

### Embodiment 13:

The secondary battery as claimed in Embodiment 10, wherein each of the first lead tab, the second lead tab, and the auxiliary lead tab has a strip shape.

### Embodiment 14:

The secondary battery as claimed in Embodiment 10, wherein a length of the first lead tab, a length of the second lead tab, and a length of the auxiliary lead tab are different from each other.

### Embodiment 15:

The secondary battery as claimed in Embodiment 10, wherein the second lead tab is longer than the auxiliary lead tab, and wherein the first lead tab is longer than the second lead tab.

### Embodiment 16:

The secondary battery as claimed in Embodiment 10, wherein a length of the first lead tab is 1 to 4 times greater than a length of the auxiliary lead tab.

### Embodiment 17:

The secondary battery as claimed in Embodiment 10, wherein the auxiliary lead tab is folded upwardly around the positive electrode current collecting plate, and the first lead tab is folded upwardly around the positive electrode current collecting plate so as to overlap the auxiliary lead tab, forming an electrical connection between the first lead tab and the auxiliary lead tab.

### Embodiment 18:

The secondary battery as claimed in Embodiment 17, wherein the first lead tab is bent in a direction toward the second lead tab so as to overlap with the second lead tab, and wherein the first lead tab and the second lead tab are fixed to the cap assembly by welding.

### Embodiment 19:

The secondary battery as claimed in Embodiment 10, wherein the auxiliary lead tab and the first lead tab overlap each other by a welded portion from a primary welding,
wherein the first lead tab and the second lead tab overlap each other by a welded portion from a secondary welding, and
wherein the first lead tab and the second lead tab are both in contact with the cap assembly by a welded portion from a tertiary welding.

### Embodiment 20:

The secondary battery as claimed in Embodiment 10, wherein the first lead tab and the second lead tab are disposed in opposite directions of the positive electrode current collecting plate, and wherein the auxiliary lead tab is disposed between the first lead tab and the second lead tab

## Claims

1. A secondary battery (100) comprising:
an electrode assembly (140) comprising a first electrode plate (142), a second electrode plate (144), and a separator (146), all of which are wound together; a case (110) accommodating the electrode assembly (140);
a cap assembly (130) sealing the case; and
a composite current collecting plate (150) located between the electrode assembly (140) and the cap assembly (130), the composite current collecting plate (150) having a plurality of lead tabs (154, 156) integrally formed thereon and being electrically connected to the first electrode plate (142) and to the cap assembly (130), the plurality of lead tabs (154, 156) being connected to the cap assembly (130).

2. The secondary battery (100) according to claim 1, wherein the composite current collecting plate (150) is made of a same metal as the first electrode plate (142).

3. The secondary battery (100) according to claim 1 or 2, wherein the composite current collecting plate (150) comprises:
a positive electrode current collecting plate (152), which is plate-shaped and is disposed above the cap assembly (130);
a first lead tab (154) extending from the positive electrode current collecting plate (152), the first lead tab (154) being connected to the cap assembly (130); and
a second lead tab (156) spaced apart from the first lead tab (154), the second lead tab (156) extending from the positive electrode current collecting plate (152), the second lead tab (156) being connected to the cap assembly (130).

4. The secondary battery (100) according to claim 3, wherein a length of the first lead tab (154) and a length of the second lead tab (156) are different from each other.

5. The secondary battery (100) according to claim 3 or 4, wherein a length of the first lead tab (154) is greater than a length of the second lead tab (156).

6. The secondary battery (100) according to claim 5, wherein:
a length of the first lead tab (154) is 1.5 to 2.5 times greater than a length of the second lead tab (156); and/or
the second lead tab (156) is bent in a direction toward the first lead tab (154) so as to overlap with the first lead tab (154), and wherein the first lead tab (154) and the second lead tab (156) are fixed to the cap assembly (130) by welding; and/or
the first lead tab (154) and the second lead tab (156) overlap each other by a welded portion formed from a primary welding, and wherein the first lead tab (154) and the second lead tab (156) are in contact with the cap assembly (130) by a welded portion formed from a secondary welding.

7. The secondary battery (100) according to one of claims 3 to 6, wherein the first lead tab (154) and the second lead tab (156) are disposed in opposite directions based on the positive electrode current collecting plate (152).

8. A secondary battery (100) comprising:
an electrode assembly (140) configured such that a first electrode plate (142), a second electrode plate (144), and a separator (146) are wound together;
a case (110) configured to receive the electrode assembly (140) therein;
a cap assembly (130) configured to seal the case;
a positive electrode current collecting plate (162) electrically connected to the electrode assembly (140);
a first lead tab (164) extending from the positive electrode current collecting plate (162), the first lead tab (164) being connected to the cap assembly (130);
a second lead tab (166) extending from the positive electrode current collecting plate (162), the second lead tab (166) being electrically connected to the cap assembly (130), the second lead tab (166) being spaced apart from the first lead tab (164); and
an auxiliary lead tab (168) extending from the positive electrode current collecting plate (162), the auxiliary lead tab (168) being electrically connected to the first lead tab (164).

9. The secondary battery (100) according to claim 8, wherein each of the positive electrode current collecting plate (162), the first lead tab (164), the second lead tab (166), and the auxiliary lead tab (168) is made of a same metal as the first electrode plate (142).

10. The secondary battery (100) according to claim 8 or 9, wherein:
the positive electrode current collecting plate (162) is disposed between the electrode assembly (140) and the cap assembly (130), the positive electrode current collecting plate (162) having a plate shape; and/or each of the first lead tab (164), the second lead tab (166), and the auxiliary lead tab (168) has a strip shape; and/or
a length of the first lead tab (164), a length of the second lead tab (166), and a length of the auxiliary lead tab (168) are different from each other; and/or
the second lead tab (166) is longer than the auxiliary lead tab (168), and wherein the first lead tab (164) is longer than the second lead tab (166).

11. The secondary battery (100) according to one of claims 8 to 10, wherein a length of the first lead tab (164) is 1 to 4 times greater than a length of the auxiliary lead tab (168).

12. The secondary battery (100) according to one of claims 8 to 11, wherein the auxiliary lead tab (168) is folded upwardly around the positive electrode current collecting plate (162), and the first lead tab (164) is folded upwardly around the positive electrode current collecting plate (162) so as to overlap the auxiliary lead tab (168), forming an electrical connection between the first lead tab (164) and the auxiliary lead tab (168).

13. The secondary battery (100) according to claim 12, wherein the first lead tab (164) is bent in a direction toward the second lead tab (166) so as to overlap with the second lead tab (166), and wherein the first lead tab (164) and the second lead tab (166) are fixed to the cap assembly (130) by welding.

14. The secondary battery (100) according to one of claims 8 to 13, wherein the auxiliary lead tab (168) and the first lead tab (164) overlap each other by a welded portion from a primary welding,
wherein the first lead tab (164) and the second lead tab (166) overlap each other by a welded portion from a secondary welding, and
wherein the first lead tab (164) and the second lead tab (166) are both in contact with the cap assembly (130) by a welded portion from a tertiary welding.

15. The secondary battery (100) according to one of claims 8 to 14, wherein the first lead tab (164) and the second lead tab (166) are disposed in opposite directions of the positive electrode current collecting plate (162), and wherein the auxiliary lead tab (168) is disposed between the first lead tab (164) and the second lead tab (166).
